# EUROPEAN PATENT SPECIFICATION

(11) **EP 4 265 954 B1**
(45) Date of publication and mention of the grant of the patent: **06.11.2024**
(21) Application number: 23168197.4
(22) Date of filing: 17.04.2023
(51) Int. Cl.: F16M 11/04, F16M 11/10, F16M 13/02

(54) **DEVICE FOR POSITIONING A DESK ACCESSORY RELATIVE TO A SUPPORT, IN PARTICULAR A DESKTOP**
VORRICHTUNG ZUM POSITIONIEREN EINES SCHREIBTISCHZUBEHÖRTEILS BEZÜGLICH EINES TRÄGERS, INSBESONDERE EINER SCHREIBTISCHPLATTE
DISPOSITIF DE POSITIONNEMENT D'UN ACCESSOIRE DE BUREAU PAR RAPPORT À UN SUPPORT, NOTAMMENT UN BUREAU

(30) Priority: 19.04.2022 NL 2031625
(43) Date of publication of application: 25.10.2023
(73) Proprietor: Fellowes Holdings B.V., 5384 VL Heesch (NL)
(72) Inventor: Langius, Roelof Hendrik, Heesch (NL)
(74) Representative: IP Maison

(56) References cited:
- EP-A1- 3 564 572
- CH-A5- 660 225
- CN-U- 203 967 351
- DE-A1- 3 430 880
- DE-U1- 20 313 158
- US-B1- 10 924 597

## Description

The present invention relates to a device for positioning a desk accessory, in particular a power socket, relative to a support, in particular a desktop.

In office environments in particular, various electricity-consuming devices are often placed in or around a desk. When it comes to fixed equipment, ie equipment that is moved little or not at all, the electrical connections and cables are often concealed and/or integrated and the sockets are often placed out of sight for aesthetic reasons. However, if it concerns loose equipment, such as telephone chargers or other power consumers that are temporarily in use, concealing the sockets, for example under a desk or even in the floor, will lead to inconvenience. After all, you one has to reach under the desk or even crawl to attach a plug to a chosen socket.

However, even when the socket is placed above the desktop and in sight, problems can arise when using it. Plugs of the equipment to be plugged in can have a certain shape or orientation that cannot be reconciled with the mostly vertical plug-in direction of the socket, the cord can leave the plug at an angle that is inconvenient or impossible in combination with the plug-in direction and in the In the case of chargers, the transformer housing integrated in the plug can sometimes interfere with the socket or objects in the vicinity.

Although such problems can be solved with a completely loosely placed power socket, this solution has the disadvantage that it does not benefit the orderliness of the working environment and is also not very stable.

It is therefore an object of the present invention to propose a solution to the problems presented, and/or at least a useful alternative to the prior art as for example shown in CH660225A5.

To this end, the invention provides a device for positioning a desk accessory, in particular a power socket, relative to a support, in particular a desktop, comprising a first fixation element, for providing a releasable rigid connection between the device and the support, a second fixation element, for providing a detachable rigid connection between the device and the desk accessory, a supporting body, adapted to keep the desk accessory at a distance from the supporting and extending at least from the first fixation element element to the second fixation element, wherein the device is provided with at least one coupling element that is detachable from a counter-coupling element, which coupling element and counter-coupling element can only be coupled to each other in a concrete number of predetermined angles, for positioning the desk accessory at said equally concrete number of angles with respect to the support.

A desktop is common for support, but any element located in the vicinity of a workplace, such as a wall (part) or a (desk) chair can, in principle, serve this purpose. The first fixation element is preferably an element that can be removed from the supporting without leaving traces and is further preferably an element that does not require any special provision on the support, such as a (screw) hole or related requirement. A suction cup, magnetic connection, removable glueing or similar connection can be considered, but preference is given to a clamp with which the supporting can be clamped.

The second fixation element can be any form of connection, such as a screw, glue or magnet connection or an element integrally provided with the desk accessory or, conversely, be recessed therein or form part of it. The supporting body can have any shape and in particular be formed on the first or second fixation element, form an integral part thereof or be connected thereto.

A concrete number of predetermined angles is understood to mean a limited number of angles and this wording explicitly excludes variable adjustable connections such as hinged couplings or ball joints. In other words, a concrete number means that coupling at an angle that lies between two adjacent concrete angle values is not possible.

The desk accessory can be a power socket, but also a telephone holder, a desk lamp or another accessory that can be placed at different angles is desirable.

The coupling element can form part of the supporting body, but in a preferred embodiment of the present invention the coupling element at least partly forms part of the first or the second fixation element. This means that the supporting body can be connected to the surface at a specific number of predetermined angles, or can be connected to the desk accessory at a specific number of predetermined angles. The counter-coupling element can herein form part of the device according to the invention, and again in particular of the supporting body, but the present invention also relates to a coupling in which the counter-coupling element forms part of the supporting or of the desk accessory.

For example, the coupling element may comprise an outer surface for engaging the counter-coupling element, which outer surface is at least partially, but not completely, rotationally symmetrical, so that at least a part of the outer surface coincides with itself when the coupling element is moved over a certain angularly twisted and part of the outer surface does not coincide with itself in an intermediate position. Where the above is referred to as an outer surface, this should be read as at least the functional part of such an outer surface. The term outer surface includes any surface facing or accessible from the outside world and may be an at least partially inscribed shape or an enclosed shape.

To enable coupling at several angles, a part of the outer surface can coincide (in a mathematical sense) with an (adjacent) part of the outer surface when the coupling element is rotated by a multiple of the determined angle.

In a further embodiment, the device according to the invention comprises a block for a relative angle change between the coupling element and the counter-coupling element when they are in the mutually coupled position. In other words, in a coupled situation, the corner cannot be rotated any further, but such an angular rotation requires the coupling to be taken apart and the coupling placed together in a different orientation for coupling the coupling part at a different angle and counter coupling part. In this way a more robust construction can be obtained that is less or not susceptible to wear due to frequent use.

The coupling element can, for instance, comprise a protruding octagon, wherein the counter-coupling element comprises an at least partially form-locking part thereon. The counter-coupling element can, for instance, comprise an opening whose shape corresponds to 6 sides of the cantilevered octagon. Within the present application, an octagon is understood to mean an element with an octagonal cross-section.

In such a configuration, the counter-coupling element encloses the coupling element in such a way that the cross-section of an opening of the counter-coupling element through which a connection of the coupling element to the rest of the second fixation protrudes is narrower than the diameter of the functional part of the coupling element. In order to prevent the coupling between the coupling element and the counter-coupling element from coming loose, this requirement is met for all preferred embodiments according to the present invention. For an octagon, this is the polygonal shape with the fewest angles where there are several mutual orientation options between the coupling element and the counter-coupling element. A hexagon is unsuitable for this because the attachment of the coupling element to the rest of the second fixation element then prevents several mutual orientations being possible. If the coupling element and/or the counter-coupling element are manufactured from a flexible or bendable material, they can be connected to each other by means of snapping together. In a preferred embodiment, however, the coupling and counter-coupling elements are only in a direction perpendicular to the direction in which they have an at least partially form-locking shape, and in particular perpendicular to the direction in which they have a polygonal form-locking shape, such as an octagonal shape, movable relative to each other.

The counter-coupling element can then extend over a full side of the desk accessory, wherein a coupling can be established by sliding the coupling element and the counter-coupling element together from a side adjacent to the full side.

In order to subsequently prevent unintentional displacements of the coupling element and the counter-coupling element, according to the invention a locking device, such as a locking pin is fitted, which connects or blocks the coupling element and the counter-coupling element in such a way that mutual movement is impeded.

In yet a further embodiment, the invention comprises a sealing means for sealing a part of an opening of the counter-coupling means which extends beyond the coupling means in a position coupled to the coupling means.

In a further preferred form, the coupling element and the counter-coupling element have at least five surfaces in which they are at least partially form-fitting.

In a general sense, it is advantageous for the locking of the coupling part in the counter-coupling part if an opening in the counter-coupling part through which a connection between the first and second fixation element extends in a coupled position is narrower than a largest diameter of the coupling part so that coupling and uncoupling without deformation of the coupling part or counter-coupling part is impeded.

The invention also relates to a combination of a device according to the invention and a desk accessory, in particular wherein the first fixation element is a clamp and the second fixation element comprises the coupling and the desk accessory a socket included.

The invention will now be elucidated with reference to the following figures. In this is:
- Figure 1 shows a first schematic view of a device according to the invention;
- Figure 2 shows a second schematic view of a device according to the invention;
- Figure 3 shows a perspective view of a device according to the invention.

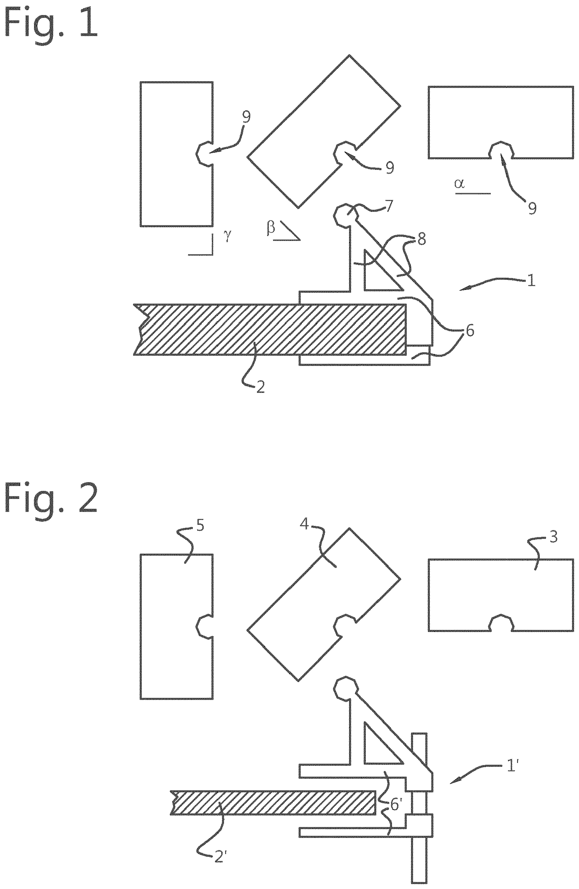

Figure 1 shows a first schematic view of a device 1 according to the present invention, for positioning a socket 3 / 4 / 5 relative to a desktop 2, comprising a first fixation element 6, formed by a clamp, for arranging a detachable rigid connection between the device 1 and the desktop 2. The device furthermore comprises a second fixation element 7, for arranging a detachable rigid connection between the device and the socket 3 / 4 / 5. Between the first and second fixation element 6, 7 there is a supporting body 6, adapted to keep the socket 3/4/5 at a distance from the desktop and extending from the first fixation element 6 to the second fixation element 7. The second fixation element 7 of the device comprises a coupling element 7 for cooperation with a counter-coupling element 9, which coupling element 7 and counter-coupling element 9 interact with each other under a concrete number of predetermined angles alpha, *beta, gamma be* connectable for positioning the socket 3 / 4 / 5 under an equally concrete number of angles *alpha, beta, gamma* relative to the desktop. The figure shows that the sockets 3 / 4 / 5 are at an angle *alpha, beta, gamma* of 0, 45 and 90 degrees respectively. In the example shown, the coupling element forms part of the second fixation element 7. The coupling element 7 has an outer surface for engaging the counter-coupling element 9, which outer surface is partially rotationally symmetrical, so that at least a part of the outer surface coincides with itself when the coupling element is rotated through a certain angle.

Because the coupling element and the counter-coupling element are partially form-fitting , they comprise a block for a mutual change in angle between the coupling element and the counter-coupling element when they are in the mutually coupled position (not shown). In that situation, the counter-coupling element 9 is placed over the coupling element 7.

The coupling element 7 comprises a cantilevered octagon, the counter-coupling element 9 comprising an at least partially form-locking part, which comprises a part of the same octagon, in this case with 4 full sides and 2 partial sides. This combination, in which the counter-coupling element comprises an opening whose shape corresponds to 6 sides of the cantilevered octagon, generally appears to be a favorable embodiment.

Figure 2 shows a similar embodiment 1', in which the clamp 6' is adjustable over a greater distance and is also capable of clamping a less thick desktop 2'.

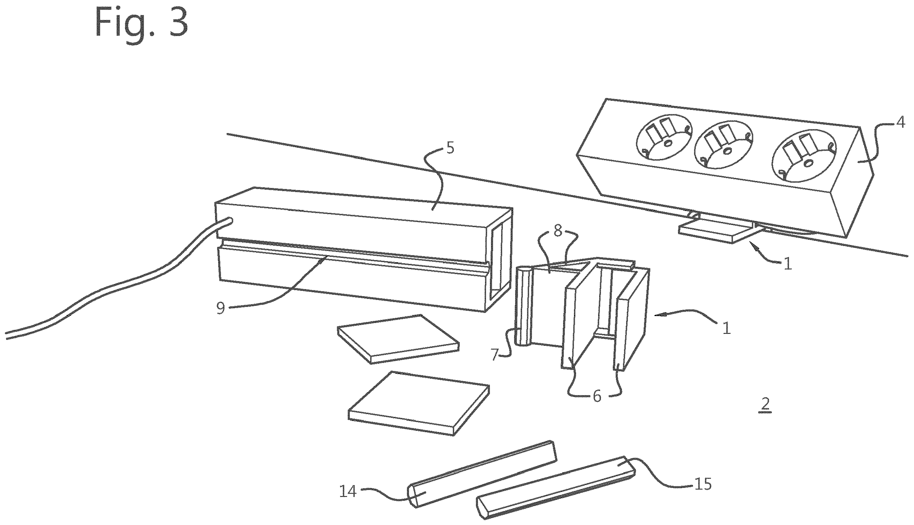

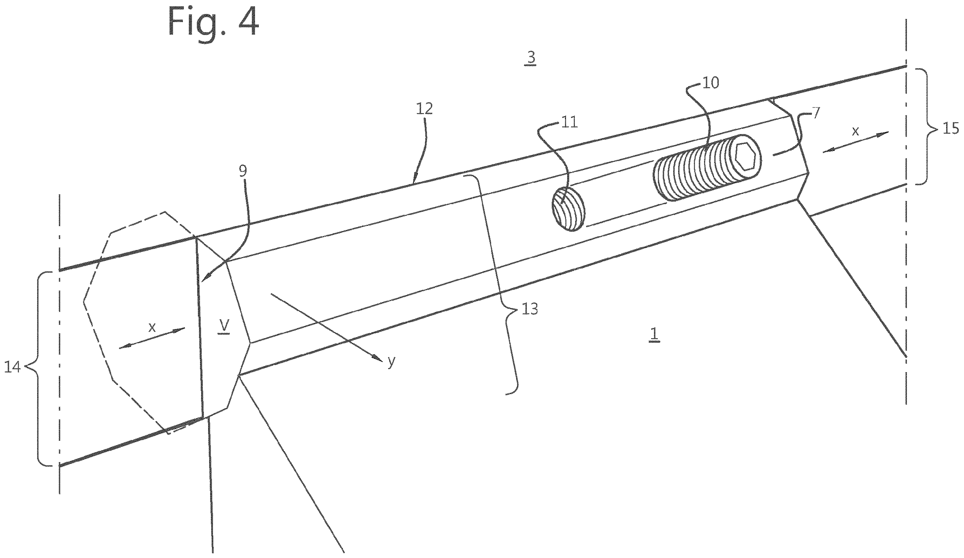

Figure 3 shows a perspective view of the configuration from figure 1. In this configuration, the counter-coupling element encloses the coupling element in such a way that the cross-section of an opening of the counter-coupling element through which a connection of the coupling element with the rest of the second fixation means can be made. protrudes from the outside, is narrower than the diameter of the functional part of the coupling element. The coupling and counter-coupling elements are only in a direction perpendicular to the direction in which they have an at least partially form-locking shape, and in particular perpendicular to the plane V (see also Figure 4) in which they have a polygonal form-locking shape, with respect to mutually movable in the direction X.

The counter-coupling element extends over a full side of the desk accessory, wherein a coupling can be effected by sliding the coupling element and the counter-coupling element together from a side adjacent to the full side.

Figure 4 shows a detail of a device like that of the previous figures, provided with a locking device 10, 11 for preventing unintentional shifts in the direction X of the coupling element 7 and the counter- coupling element 9. The locking device 10, 11 consists of a locking pin 10 that cooperates with a recess 11 arranged in the coupling element 7, which in this case are both provided with cooperating screw thread, which connects or blocks the coupling element 7 and the counter-coupling element 9 in such a way that a mutual displacement in the direction X is obstructed. A movement in the direction Y is impeded because an opening 12 in the counter-coupling part 9 through which a connection 13 between the first and second fixation elements 6, 7 extends in a coupled condition is narrower than a largest diameter of the coupling part 7, so that coupling and uncoupling without deformation of the coupling part 7 or counter-coupling part 9 is impeded.

Figure 4 further shows sealing means 14, 15 for sealing a part of the opening 12 of counter-coupling means 9 which extends beyond coupling means 7 in a position coupled to coupling means 7.

The examples shown above only serve as an explanation and are in no way limiting for the scope of protection of the present invention as defined in the following claims.

## Claims

1. Device (1) for positioning a desk accessory, in particular a power socket, relative to a support, in particular a desktop, comprising: - a first fixation element (6), for providing a releasable rigid connection between the device and the support; - a second fixation element (6), for providing a releasable rigid connection between the device and the desk accessory; - a supporting body (8), designed for keeping the desk accessory at a distance from the support and extending at least from the first fixation element to the second fixation element; wherein - the device is provided with at least one coupling element (7) that is detachable from a counter-coupling element (9), which coupling element and counter-coupling element can be coupled to each other in a concrete number of predetermined angles only for the purpose of positioning the desk accessory relative to the supporting in an equally concrete number of angles, wherein the coupling element (7) is at least partly part of the first or second fixation elements (6), wherein the coupling element has an outer surface for engaging the counter-coupling element, which outer surface is at least is at least partially rotationally symmetrical, so that at least a part of the outer surface coincides with itself when the coupling member is rotated through a certain angle, and part of the outer surface does not coincide with itself in an intermediate position, wherein part of the outer surface, at least in a mathematical sense, coincides with an adjacent or non-adjacent part of the outer surface when the coupling element is rotated by a multiple of the predetermined angle, wherein an opening in the counter-coupling element through which a connection between the first and second fixation elements extend in a coupled position is narrower than a largest cross-sectional-size of the coupling element, so that coupling and uncoupling without deformation of the coupling part or counter-coupling part are impeded, **characterized by** a locking device, such as a locking pin (10), which connects or blocks the coupling element and the counter-coupling element in such a way that mutual movement is impeded.

2. Device according to claim 1, wherein the coupling and counter-coupling elements can only be moved relative to each other in a direction perpendicular to a plane in which they have a polygonal form-locking shape.

3. Device according to claim 1 or 2, comprising a locking device, such as a locking pin, for connecting the coupling element and the counter-coupling element in such a way that mutual movement thereof is prevented.

4. Device according to any of the preceding claims, comprising a sealing means for sealing a part of an opening of the counter-coupling element which extends beyond the coupling element in a position coupled to the coupling element.

5. Device according to any of the preceding claims, wherein the coupling element comprises a protruding octagon, wherein the counter-coupling element comprises an at least partially form-locking part.

6. Device according to claim 5, wherein the counter-coupling element comprises an opening with a shape corresponding to 6 sides of the protruding octagon.

7. Device according to any of the preceding claims, arranged for cooperation with a desk accessory, wherein the counter-coupling element is provided in or forms part of the desk accessory.

8. Combination of a device according to one of the preceding claims and a desk accessory.

9. Combination according to claim 8, wherein the first fixation element is a clamp and the second fixation element comprises the coupling element, and the desk accessory comprises a power socket.

## Patentansprüche

1. Vorrichtung (1) zum Positionieren eines Schreibtischzubehörteils, insbesondere einer Steckdose, bezüglich eines Trägers, insbesondere einer Schreibtischplatte, umfassend: - Ein erstes Befestigungselement (6) zum Bereitstellen einer lösbaren festen Verbindung zwischen der Vorrichtung und dem Träger; - ein zweites Befestigungselement (6) zum Bereitstellen einer lösbaren festen Verbindung zwischen der Vorrichtung und dem Schreibtischzubehörteil; - einen Stützkörper (8), der dazu vorgesehen ist, das Schreibtischzubehörteil in einem Abstand zum Träger zu halten und der sich zumindest von dem ersten Befestigungselement zu dem zweiten Befestigungselement erstreckt; wobei - die Vorrichtung mit zumindest einem Koppelelement (7) versehen ist, das von einem Koppel-Gegenelement (9) trennbar ist, wobei das Koppelelement und das Koppel-Gegenelement miteinander nur in einer bestimmten Anzahl an vorbestimmten Winkeln koppelbar sind, um das Schreibtischzubehörteil nur in einer gleichermaßen bestimmten Anzahl an Winkeln bezüglich des Trägers zu positionieren, wobei das Koppelelement (7) zumindest zum Teil zum ersten oder zum zweiten Befestigungselement (6) gehört, wobei das Koppelelement eine äußere Oberfläche zum Eingriff in das Koppel-Gegenelement aufweist, wobei zumindest diese äußere Oberfläche zumindest drehsymmetrisch ist, sodass zumindest ein Teil der äußeren Oberfläche mit sich in Deckung kommt, wenn das Koppelelement um einen bestimmten Winkel gedreht wird, und wobei ein Teil der äußeren Oberfläche in einer Zwischenstellung nicht mit sich selbst in Deckung kommt, wobei ein Teil der äußeren Oberfläche zumindest in einem mathematischen Sinn mit einem benachbarten oder nicht benachbarten Teil der äußeren Oberfläche in Deckung kommt, wenn das Koppelelement um ein Vielfaches des bestimmten Winkels gedreht wird, wobei eine Öffnung in dem Koppel-Gegenelement, durch die sich in einer Koppelstellung eine Verbindung zwischen dem ersten und dem zweiten Befestigungselement erstreckt, enger ist als ein größtes Querschnittsmaß des Koppelstücks, sodass ein Koppeln und Entkoppeln ohne Verformung des Koppelstücks oder des Koppel-Gegenstücks erschwert ist, **gekennzeichnet durch** eine Feststellvorrichtung, wie etwa einen Raststift (10), die das Koppelelement und das Koppel-Gegenelement so verbindet oder sperrt, dass eine wechselseitige Bewegung erschwert wird.

2. Vorrichtung gemäß Anspruch 1, bei der das Koppel- und das Gegen-Koppelelement nur in einer Richtung senkrecht zu einer Ebene bewegbar sind, in der sie eine mehreckige formrastende Gestalt aufweisen.

3. Vorrichtung gemäß Anspruch 1 oder 2, aufweisend eine Feststellvorrichtung, wie etwa einen Raststift, zum Verbinden des Koppelelements und des Koppel-Gegenelements derart, dass eine wechselseitige Bewegung verhindert wird.

4. Vorrichtung gemäß einem der vorhergehenden Ansprüche, aufweisend eine Dichteinrichtung zum Abdichten eines Teils einer Öffnung der Koppel-Gegeneinrichtung, die sich in einer Stellung, in der diese mit der Koppeleinrichtung gekoppelt ist, über die Koppeleinrichtung hinaus erstreckt.

5. Vorrichtung gemäß einem der vorhergehenden Ansprüche, bei der das Koppelelement ein vorragendes Achteck aufweist, wobei das Koppel-Gegenelement zumindest einen teilweise formrastenden Teil aufweist.

6. Vorrichtung gemäß Anspruch 5, bei der das Koppel-Gegenelement eine Öffnung mit einer Form aufweist, die 6 Seiten des freitragend angeordneten Achtecks entspricht.

7. Vorrichtung gemäß einem der vorhergehenden Ansprüche, eingerichtet zum Zusammenwirken mit einem Schreibtischzubehörteil, wobei das Koppel-Gegenelement in dem Schreibtischzubehörteil bereitgestellt ist oder zu dem Schreibtischzubehörteil gehört.

8. Kombination aus einer Vorrichtung gemäß einem der vorhergehenden Ansprüche und einem Schreibtischzubehörteil.

9. Kombination gemäß Anspruch 8, bei der das erste Befestigungselement eine Klemme ist und das zweite Befestigungselement die Kopplung umfasst und das Schreibtischzubehörteil eine Steckdose aufweist.

## Revendications

1. Dispositif de positionnement d'un accessoire de bureau, notamment une rallonge électrique, par rapport à un support, notamment un bureau, comprenant :
- un premier élément de fixation pour fournir une liaison rigide amovible entre le dispositif et le support;
- un second élément de fixation pour fournir une liaison rigide amovible entre le dispositif et l'accessoire de bureau ; et
- un corps de support conçu pour maintenir l'accessoire de bureau à une distance du support et s'étendant au moins du premier élément de fixation au second élément de fixation,
dans lequel:
- le dispositif est pourvu d'au moins un élément de couplage qui est détachable d'un élément de contre-couplage, lesquels élément de couplage et élément de contre-couplage peuvent être couplés l'un à l'autre selon un nombre entier d'angles prédéterminés uniquement dans le but de positionner l'accessoire de bureau par rapport au support selon un nombre également entier d'angles, dans lequel l'élément de couplage fait au moins partiellement partie du premier, ou du second, élément de fixation, dans lequel l'élément de couplage présente une surface extérieure pour venir en prise avec l'élément de contre-couplage, laquelle surface extérieure est au moins partiellement invariante par rotation, de sorte qu'au moins une partie de la surface externe coïncide avec elle-même lorsque l'élément de couplage est tourné d'un des angles prédéterminés, et qu'une partie de la surface externe ne coïncide pas avec elle-même dans une position intermédiaire, dans lequel une partie de la surface extérieure coïncide (au moins au sens mathématique) avec une partie adjacente, ou non-adjacente, de la surface extérieure lorsque l'élément de couplage est tourné d'un multiple de l'angle prédéterminé, dans lequel une ouverture dans l'élément de contre-couplage, à travers lequel une liaison entre les premier et second éléments de fixation s'étend dans une position de couplage, est plus étroite qu'une plus grande taille de la section transversale de l'élément de couplage, de sorte qu'un couplage et un découplage sans déformation de l'élément de couplage ou de l'élément de contre-couplage soient empêchés,
**caractérisé en ce qu'**il comprend en outre un dispositif de verrouillage, tel qu'une goupille, pour empêcher un changement d'angle mutuel entre l'élément de couplage et l'élément de contre-couplage, lorsqu'ils sont dans la position mutuellement couplée.

2. Dispositif selon la revendication 1, dans lequel l'élément de couplage et l'élément de contre-couplage ne peuvent être déplacés l'un par rapport à l'autre que dans une direction perpendiculaire à un plan dans lequel ils présentent une forme de verrouillage de forme polygonale.

3. Dispositif selon la revendication 1 ou 2, comprenant un dispositif de verrouillage, tel qu'une goupille de verrouillage, pour relier l'élément de couplage et l'élément de contre-couplage de telle manière qu'un mouvement mutuel de ceux-ci soit empêché.

4. Dispositif selon l'une quelconque des revendications précédentes, comprenant un moyen d'étanchéité pour rendre étanche une partie d'une ouverture de l'élément de contre-couplage, qui s'étend au-delà de l'élément de couplage dans une position couplée à l'élément de couplage.

5. Dispositif selon l'une quelconque des revendications précédentes, dans lequel l'élément de couplage comprend un octogone saillant, dans lequel l'élément de contre-couplage comprend au moins partiellement une partie à verrouillage de forme.

6. Dispositif selon la revendication 5, dans lequel l'élément de contre-couplage comprend une ouverture de forme correspondant à six côtés de l'octogone saillant.

7. Dispositif selon l'une quelconque des revendications précédentes, agencé pour coopérer avec un accessoire de bureau, dans lequel l'élément de contre-couplage est prévu dans, ou fait partie de, l'accessoire de bureau.

8. Système comprenant un dispositif selon l'une des revendications précédentes et un accessoire de bureau.

9. Système selon la revendication 8, dans laquelle le premier élément de fixation est une pince, le second élément de fixation comprend l'élément de couplage, et l'accessoire de bureau comprend une rallonge électrique.
